# EUROPEAN PATENT APPLICATION

(11) **EP 1 745 909 A2**
(43) Date of publication of application: **24.01.2007**
(21) Application number: 06117108.8
(22) Date of filing: 13.07.2006
(51) Int. Cl.: B29C 44/06

(54) **Molded sports board**

(30) Priority: 22.07.2005 US 188061
(71) Applicant: Bamba International (Canada) LTD., Thornhill ON L3T1L7 (CA)
(72) Inventor: Cheung, Wah Kan (Kenneth), Suite 102 Thornhill Ontario L3T 1L7 (CA)
(74) Representative: Hellmich, Wolfgang

(57) **Abstract**

A method of manufacturing a contoured sports board comprising the steps of providing a non-expanded film layer (16), providing a polymer foam layer (18, 19), bonding the film layer to the foam layer to form a top laminated sheet (16/17/18/19), providing a bottom sheet (21/22/23, 30), providing a mold having a top portion (44) and a bottom portion (45), the top and bottom portions having inner surfaces (63, 64) and configured to be placed in opposition to each other with their inner surfaces defining a cavity (49) therebetween, the inner surface of the top portion of the mold having contouring defining at least one valley (61, 62), placing the film layer of the top sheet against the inner surface of the top mold portion, mixing an isocyanate and a polyol component to provide a urethane foam forming mixture (50), spraying the mixture on the foam layer of the top sheet, placing the bottom sheet on the top sheet with the mixture between the top sheet and the bottom sheet, placing the inner surface of the bottom portion of the mold on the bottom sheet, mating the bottom portion of the mold with the top portion of the mold, applying pressure to the mold, allowing the mixture time to expand between the top sheet and the bottom sheet, unmating the top and bottom portions of the mold, whereby heat from the expansion of the mixture to form a polyurethane foam core heat laminates the top sheet and the bottom sheet to the polyurethane core to form a board having an outer surface contour generally conforming to the contour of the inner surfaces of the mold.

## Description

The present invention relates to foam sports boards for recreational use and, more particularly, to a contour-molded laminated foam sports board having a polyurethane foam core.

Body boards for riding waves, ski boards and gliding boards made for use on snow, and other recreational sports boards made of foam, are known in the prior art. Such boards typically include a core with laminated layers surrounding the core. The outer base layer of the laminate is adapted to used on a particular sports surface (water or snow) and the top laminated layer often includes some type of imprinted graphics.

For example, it is known that ski or snow boards may be constructed with a polyethylene base layer having longitudinally extending steel edges laminated to a thermoset composite such as uncured preimpregnated fiberglass. This base laminate is then applied to a preformed polyurethane foam core. Upper layers, generally consisting of a plastic top sheet, a non-woven fabric intermediate layer, and a fiberglass reinforcement layer, are applied to the top surface of the core. The conventional manufacturing process for this type of board is by compression molding. The process calls for hand laying each layer and applying resin, typically epoxy or polyester based, to impregnate the different layers. Heat and pressure are then applied, with the bonding between layers provided by the resin after it has cured for a period of time at a raised temperature. However, this type of board and manufacturing process has a number of drawbacks. For example, the preformed polyurethane foam core, the polyethylene layer and the thermoset fiberglass composite layer are generally required to be subjected to a special sanding process in order to roughen the bonding surfaces and get the bond strength required. In addition, the thermoset fiberglass composite layers are difficult to work with and require substantial curing periods during the production process.

Another type of sports board known in the prior art is a wakeboard. These boards generally have a preformed and preshaped polyurethane foam core with layers of reinforcement, such as fiberglass, carbon fiber or the like, applied to the bottom and top surfaces of the foam core. A plastic sheet having an intermediate layer of non-woven fabric forms the base of the board. The top of these boards are formed of one or more layers of reinforcement, typically fiberglass, with a graphic imprinted fabric top sheet laid above the fiberglass reinforcement layer. These boards are also manufactured using the above described compression molding and have the same drawbacks as described with the prior art snow boards.

A second manufacturing process known in the prior art is to use thermosetting resins, such as a polyurethane foam resin, to laminate the boards. For example, with the snow board, a thermoset fiberglass composite layer is laid onto a polyethylene base sheet. However, here too the bonding surfaces have to roughened and a special primer is applied to obtain the required bonding strength when bonding the two layers together. This two layer laminate is then placed on the bottom of a mold. A top laminate of a graphically imprinted plastic sheet, a non-woven fabric intermediate layer, and a thermoset fiberglass composite is then formed. Again, however, the surface of the thermoset composite must be sanded to provide a rough surface for bonding and a special primer is normally used to bond the thermoset composite layer to the non-woven fabric surface of the plastic top sheet. This three layer laminate is then placed on the top of the mold. After the top and bottom mold portions are mated, a polyurethane foam resin is then injected between the base laminate and the top laminate to join the two together by bonding to the roughened thermoset fiberglass composite surfaces.

As mentioned above, these conventional processes generally require the surfaces of the fiberglass that comes into contact with the foam core to be roughened so that the mechanical bond between these parts is strong enough to avoid premature delamination. In addition, the steps of laying up each layer and applying by hand the thermoset resin for the complete wetting of each layer, as well as waiting for it to cure, and preparing the surfaces to bond well with the foam are labor intensive, time consuming and require experienced technical workers. Thus the cost of manufacturing such boards is high.

In addition, conventional boards of this type generally include a graphic image which is normally printed on either a rigid plastic top sheet or a fabric sheet. These conventional rigid plastic sheets may include PBT, PA, ABS or TPE and have a typical thickness of 0.5 mm. However, due to the high rigidity of the plastic sheet, they can only be molded into relatively flat surface profiles and cannot be used to provide a more highly contoured surface. The alternative fabric sheets may include natural or synthetic fabrics such as cotton or non-woven fabric and they commonly have a thickness of about 0.3 mm. With fabric sheets, while they can be molded into more contoured shapes, they have other limitations such as inferior image resolution and susceptibility to wrinkle defects in areas of high contouring.

Foam sleds that include a graphic-imprinted polyethylene film top layer and a polyethylene foam core, together with a polyethylene bottom slick skin are also well-known in the prior art. These can be manufactured using conventional heat lamination processes because each of the layers has the same polyethylene structure. However, such polyethylene-core foam boards lack the desired rigidity and stiffness that other polymeric foam core boards may have. This lack of rigidity in a polyethylene foam core will cause the sled to flex with the weight of the rider, which can result in the foam sled submerging below the snow surface and thereby reduce the speed and directional stability of the board on a snow covered slope.

Accordingly, it would be desirable to provide a foam slide having a rigid foam core for faster sliding speed and better tracking stability, while also provide a board that has a top laminate that provides adequate mechanical strength, is soft, is flexible enough to be molded into highly contoured shapes, and can be provided with a wear resistant graphic top surface. It would also be advantageous to be able to manufacture such a board in a cost effective manufacturing process.

With parenthetical reference to the corresponding parts, portions or surfaces of the disclosed embodiment, merely for the purposes of illustration and not by way of limitation, the present invention provides a method of manufacturing a contoured sports board comprising the steps of providing a non-expanded film layer (16), providing a polymer foam layer (18/19), bonding the film layer to the foam layer to form a top laminated sheet (16/17/18/19), providing a bottom sheet (21/22/23, 30), providing a mold having a top portion (44) and a bottom portion (45), the top and bottom portions having inner surfaces (63, 64) and configured to be placed in opposition to each other with their inner surfaces defining a cavity (49) therebetween, the inner surface of the top portion of the mold having contouring defining at least one valley (61, 62), placing the film layer of the top sheet against the inner surface of the top mold portion, mixing an isocyanate and a polyol component to provide a urethane foam forming mixture (50), spraying the mixture on the foam layer of the top sheet, placing the bottom sheet on the top sheet with the mixture between the top sheet and the bottom sheet, placing the inner surface of the bottom portion of the mold on the bottom sheet, mating the bottom portion of the mold with the top portion of the mold, applying pressure to the mold, allowing the mixture time to expand between the top sheet and the bottom sheet, unmating the top and bottom portions of the mold, whereby heat from the expansion of the mixture to form a polyurethane foam core heat laminates the top sheet and the bottom sheet to the polyurethane core to form a board having an outer surface contour generally conforming to the contour of the inner surfaces of the mold.

The bottom sheet may be formed by extruding a polymer film layer (23) and heat laminating the polymer film to a polymer foam layer (21/22) to form a film/foam laminated sheet (21/22/23). The polymer film may have a thickness in the range of about 0.3 to about 1.5 mm. The bottom sheet may comprises a thermoplastic polyurethane film layer (30) and the thermoplastic polyurethane film may have a thickness in the range of about 0.3 to about 1.5 mm. The bottom sheet may have a bottom surface with longitudinally-extending alternating grooves and ridges. The method may further comprise the steps of providing a second non-opaque polymer film layer having an outer surface and an inner surface, applying a graphic image to the inner surface of the second film layer, and laminating the inner surface of the second film layer to the film layer. The film layer may be selected from a group consisting of polyethylene, polypropylene, and a copolymer of ethylene vinyl acetate and polyethylene. The polymer foam layer may be selected from a group consisting of polyethylene foam, polypropylene foam, a copolymer foam of polyethylene and ethylene vinyl acetate, a copolymer foam of polyethylene and polypropylene, and a copolymer foam of polystyrene and polyethylene. The polymer foam layer may be thermoplastic polymer foam.

The present invention also provides a molded sports board comprising a polyurethane foam core (20), a graphically imprinted film layer (16) having an outer surface, an intermediate polymer foam layer (18/19) between the film layer and the core, the film and intermediate layers having a molded profile such that the outer surface of the film layer has a contoured cross-section having multiple ridges (55, 56) and valleys (57, 58) therebetween. The valleys may have a depth (65) of at least 2 mm.

Accordingly, the general object of the present invention is to provide an improved manufacturing process for a polyurethane foam core sports board.

Another object is to provide a sports board that can be molded with deep or severe contouring on the top surface.

Another object is to provide a sports board having a soft top surface.

Another object is to provide a sports board having a semi-rigid to rigid polyurethane foam core.

Another object is to provide a sports board having a sharp and wear-resistant graphic surface.

Another object is to provide a sports board which can have a graphic-imprinted film surface on both the top and bottom outer surfaces of the board.

Another object is to provide a board that can be manufactured in a short production cycle time.

These and other objects and advantages will become apparent from the foregoing and ongoing written specification and drawings.

Fig. 1 is a top plan view of a first embodiment of the improved sports board.

Fig. 2 is a top plan view of the sports board shown in Fig. 1 with certain graphic elements accentuated.

Fig. 3 is a transverse vertical sectional view of the sports board shown in Fig. 1, taken generally on line A-A of Fig. 1.

Fig. 4 is a longitudinal vertical sectional view of the sports board shown in Fig. 1, taken generally on line B-B of Fig. 1.

Fig. 5 is a transverse vertical sectional view of a second cross-sectional embodiment of the sports board shown in Fig. 1, taken generally on line A-A of Fig. 1.

Fig. 6 is a longitudinal vertical sectional view of the embodiment of the sports board shown in Fig. 5, taken generally on line B-B of Fig. 1.

Fig. 7 is a transverse vertical sectional view of a third cross-sectional embodiment of the sports board shown in Fig. 1, taken generally on line A-A of Fig. 1.

Fig. 8 is a longitudinal vertical sectional view of the embodiment of the sports board shown in Fig. 7, taken generally on line B-B of Fig. 1.

Fig. 9 is a plan view of the top portion of the mold used to form the sports board shown in Fig. 1.

Fig. 10 is a transverse vertical sectional view of the top portion of the mold shown in Fig. 9, taken generally on line C-C of Fig. 9.

Fig. 11 is a longitudinal vertical cross-sectional view of the top portion of the mold shown in Fig. 9, taken generally on line D-D of Fig. 9.

Fig. 12 is a plan view of the bottom portion of the mold used to form the sports board shown in Fig. 1.

Fig. 13 is a transverse vertical sectional view of the bottom portion of the mold shown in Fig. 12, taken generally on line E-E of Fig. 12.

Fig. 14 is a longitudinal vertical sectional view of the bottom portion of the mold shown in Fig. 12, taken generally on line F-F of Fig. 12.

Fig. 15 is a schematic showing the process by which the top laminated sheets of the preferred embodiments are formed.

Fig. 16 is a schematic showing the process by which the bottom laminated sheets of the preferred embodiments are formed.

Fig. 17a-e show the process by which the top and bottom sheets are laminated to the core to form the contoured board shown in Fig. 1.

Fig. 18 is an enlarged longitudinal vertical sectional view of the contouring shown in Figs. 1, 4, 6 and 8, taken within the indicated circle of Figs. 1, 4, 6 and 8.

Fig. 19 is a cross section view of the bowl shaped sports board showing the various layers.

Fig. 20 is a perspective view of the fourth embodiment showing the bowl shaped profile.

Fig. 21 is a cross section view of the sports board.

Fig. 22 is a cross section view of the downturned lip embodiment of the sports board.

At the outset, it should be clearly understood that like reference numerals are intended to identify the same structural elements, portions or surfaces consistently throughout the several drawing figures, as such elements, portions or surfaces may be further described or explained by the entire written specification, of which this detailed description is an integral part. Unless otherwise indicated, the drawings are intended to be read (e.g., cross-hatching, arrangement of parts, proportion, degree, etc.) together with the specification, and are to be considered a portion of the entire written description of this invention. As used in the following description, the terms "horizontal", "vertical", "left", "right", "up" and "down", as well as adjectival and adverbial derivatives thereof (*e.g.,* "horizontally", "rightwardly", "upwardly", etc.), simply refer to the orientation of the illustrated structure as the particular drawing figure faces the reader. Similarly, the terms "inwardly" and "outwardly" generally refer to the orientation of a surface relative to its axis of elongation, or axis of rotation, as appropriate.

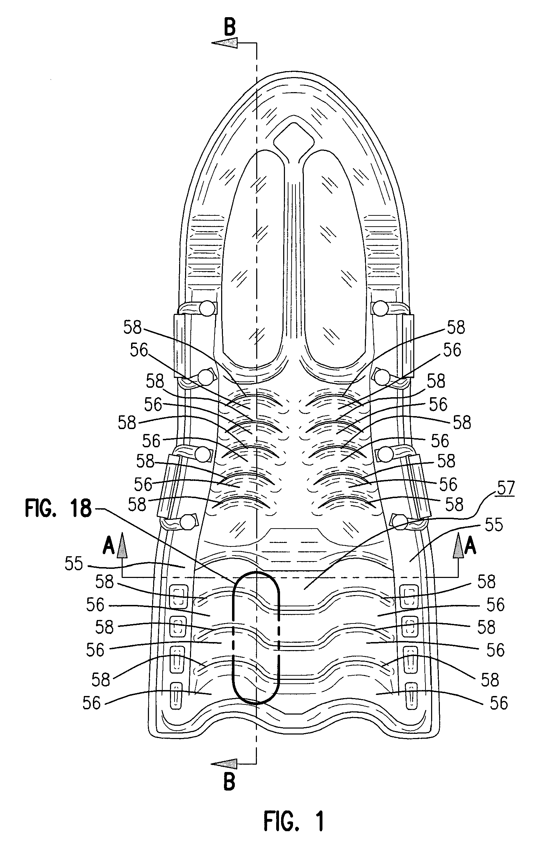

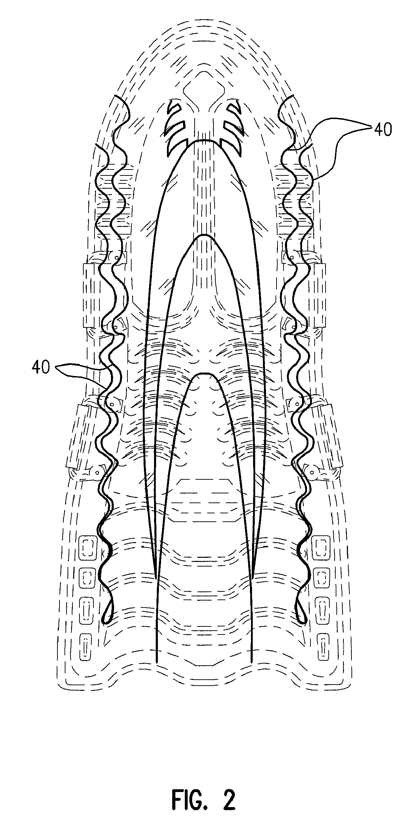

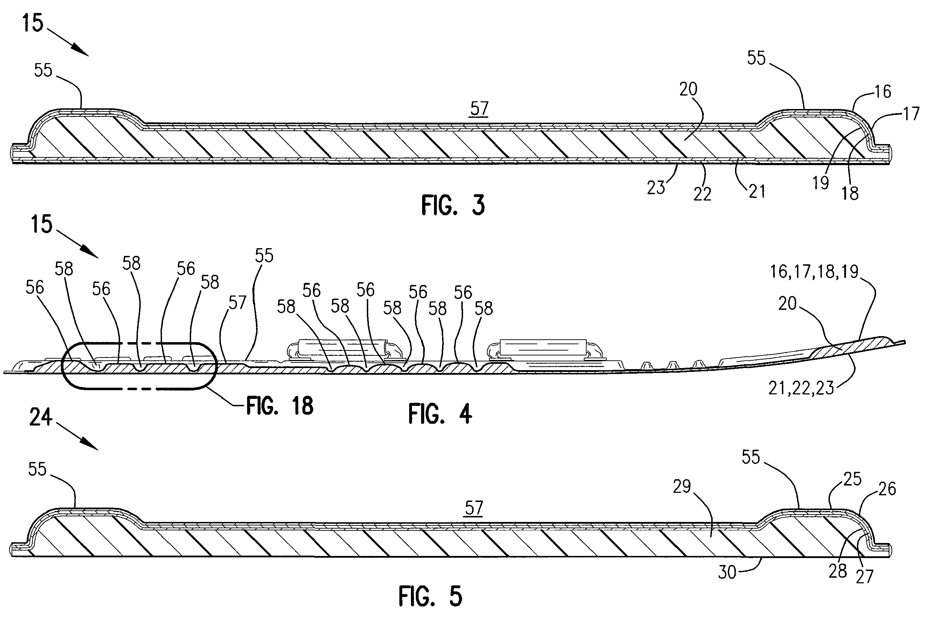

Referring now to the drawings and, more particularly, to Fig. 1 thereof, the invention provides an improved contoured sports board, of which the presently preferred embodiment is generally indicated at 15. As shown in Fig. 1, the top surface of the board is deeply contoured with both generally longitudinally and transversely extending ridges 55, 56 and valleys 57, 58 therebetween. These contours are also shown in the longitudinal vertical cross-sectional views of the preferred embodiments of Figs. 4, 6 and 8, respectively. Fig. 2 highlights certain of the graphics visible on the top surface of the board. These graphics are distinct and clear even with the highly contoured surfacing of the board.

As shown in Figs. 3-4, the first embodiment of the molded sports board comprises eight layers laminated together. Top layer 16 is unexpanded polyethylene film with imprinted graphics 40. The graphics on layer 16 are imprinted using any of several conventional processes for printing on polyethylene. An example of such a process is corona printing, in which an electrical discharge temporarily alters the surface molecules of the polyethylene film, allowing inks to adhere to the film. Layer 16 has a thickness of between about 0.02 and 0.15 mm, and preferably a thickness of about 0.07 mm. Layer 16 has a density in the range of about 0.91 to about 0.96 g/cm³, and preferably a density of 0.95 g/cm³. Alternatively, layer 16 may comprise two non-expanded polymer film layers in order to provide and protect the graphic image. Rather than having the graphic image imprinted on the inner surface of a single film layer, two film layers may be used. A first non-opaque polymer film imprinted with graphics on one side is bonded to a second polymer film layer by a conventional laminating process, with the graphically imprinted side of the non-opaque film facing the second polymer film layer.

Layer 17 is an extruded adhesive resin between layers 16 and 18. In the preferred embodiment, layer 17 is an ethylene and methyl acrylic copolymer. Layer 17 has a thickness of between 0.02 and 0.15 mm, and preferably a thickness of 0.07 mm. Layer 17 has a density in the range of 0.90 to 0.98 g/cm³, and preferably a density of 0.95 g/cm³. The ethylene methyl acrylate copolymer EMAC provided by Eastman Chemical Company, of 100 North Eastman Road, Kingsport, TN 37662, may be employed in the preferred embodiment. It is contemplated that alternative adhesive resins, such as anhydride-modified polyolefin, anhydride-modified ethylene vinyl acetate, anhydride-modified low-density polyethylene, and anhydride-modified linear low-density polyethylene, may be employed. The Bynel® adhesive resin, provided by Dupont Packaging, of 1007 Market Street, Wilmington, DE 19898, may be employed in such an alternative embodiment.

Layer 18 is expanded polyethylene foam having a thickness of between about 1 and 6 mm, and preferably a thickness of about 4 mm. Layer 18 has a density of between about 4 to 10 Ibs/ft³, and preferably a density of about 7 Ibs/ft³. Layer 19 is also an expanded polyethylene foam. Layer 19 has a thickness of between about 1 and 20 mm, and preferably a thickness of about 2 mm. Layer 19 has a density in the range of about 1.6 to 4 lbs/ft³, and preferably a density of about 2.2 lbs/ft³. This dual polyethylene foam laminate sheet 18/19, with outer layers of differing densities, between graphic film layer 17 and polyurethane core 20 facilitates a strong bond to the film and core layers, respectively. A higher density foam 18 is used next to graphic film layer 16 because this higher density foam 18 will bond better to the film layer, in part because it has a smoother outer surface. Using a lower density polyethylene foam sheet 19 next to polyurethane foam core 20 is beneficial in that this low density foam 19 will melt faster to polyurethane core 20 and therefore provide a faster bond.

Layer 20 is polyurethane foam, and acts as the core of board 15. Layer 20 has a thickness of between about 5 and 45 mm, and preferably a thickness of about 18 mm. Layer 20 has a density in the range of about 6 to 30 Ibs/ft³, and preferably a density of about 8 Ibs/ft³. A polyurethane foam core provides improved rigidity and stiffness to the board.

Layer 21 is expanded polyethylene foam. Layer 21 has a thickness of between about 1 and 20 mm, and preferably a thickness of about 3 mm. Layer 21 has a density in the range of about 1.6 to 4 Ibs/ft³, and preferably a density of about 2.2 Ibs/ft³. Layer 22 is also expanded polyethylene foam. Layer 22 has a thickness of between about 1 and 6 mm, and preferably a thickness of about 4 mm. Layer 22 has a density in the range of about 5 to 11 lbs/ft³, and preferably a density of 9 lbs/ft³.

Bottom layer 23 is non-expanded polyethylene film. Layer 23 has a thickness of between about 0.3 and 1.5 mm, and preferably a thickness of about 0.5 mm. Layer 23 has a density in the range of about 0.91 to 0.96 g/cm³, and preferably a density of about 0.95 g/cm³.

Figs. 5-6 show an alternative embodiment 24 of the molded sports board. In this embodiment, board 24 has six laminated layers, rather than eight. Layers 25-28 are generally of the same structure and composition as layers 16-19, respectively, of first embodiment 15.

Layer 29 is expanded polyurethane foam, and acts as the core of board 24. Layer 29 has a thickness of between about 10 and 50 mm, and preferably a thickness of about 22 mm. Layer 29 has a density in the range of about 6 to 30 Ibs/ft³, and preferably a density of about 8 Ibs/ft³.

Bottom layer 30 is non-expanded thermoplastic polyurethane (TPU) film. Layer 30 has a thickness of between about 0.3 and 2.0 mm, and preferably a thickness of about 0.7 mm. Layer 30 has a density in the range of about 0.96 to 1.16 g/cm³, and preferably a density of about 1.06 g/cm³. It is contemplated that other thermoplastic films may be used such as chlorinated polyethylene (CPE), chlorinated propylene (CPP), chlorosulfonated polyethylene (CSPE) and ethylene-propylene-diene copolymer (EPDM).

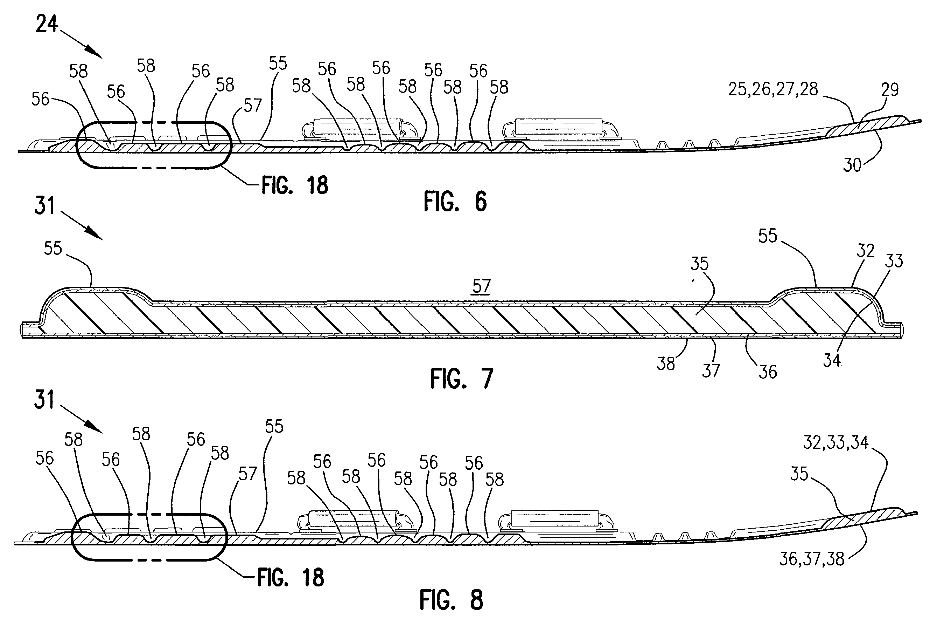

Figs. 7-8 show a third embodiment 31. This embodiment has seven layers. Layers 32 and 33 are generally of the same structure and composition as layers 16 and 17 in the first embodiment.

Layer 34 is expanded polyethylene foam. Layer 34 has a thickness of between about 4 and 10 mm, and preferably a thickness of about 7 mm. Layer 34 has a density in the range of about 1.6 to about 4 lb/ft³, and preferably a density of about 2.2 lb/ft³.

Layer 35 is expanded polyurethane foam, and acts as the core of board 31. Layer 35 has a thickness of between about 5 and 45 mm, and preferably a thickness of about 18 mm. Layer 35 has a density in the range of about 6 to 30 lbs/ft³, and preferably a density of about 8 lb/ft³.

Layers 36-38 are generally of the same structure and composition as layers 21-23, respectively, of second embodiment 24.

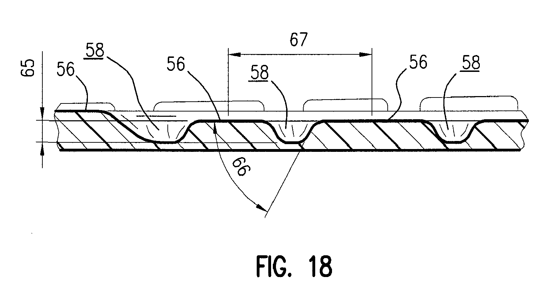

As shown in Fig. 18, the surface of the boards are deeply contoured. In the preferred embodiment, the depth 65 of a valley relative to its adjacent ridge ranges from between about 2 and 25 mm, and preferably about 7 mm, and the slope 66 between the two is in the range of about 45 to 80 degrees, and preferably about 75 degrees. The distance 67 between tops of adjacent ridges may vary from between about 12 and 200 mm. Even with this deep contouring, the layers have good bonding strength and the graphics are distinct and have good image resolution.

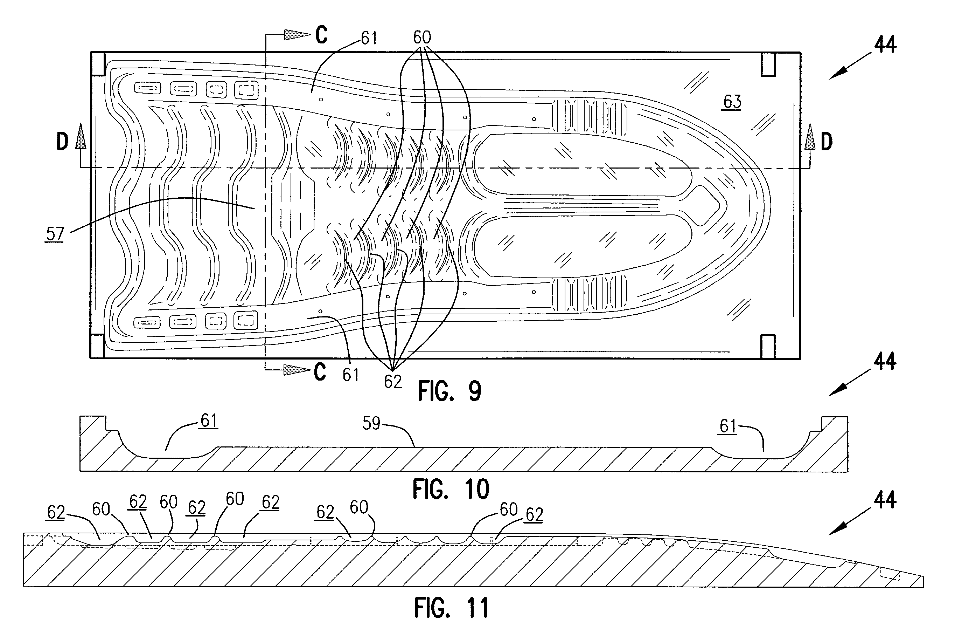

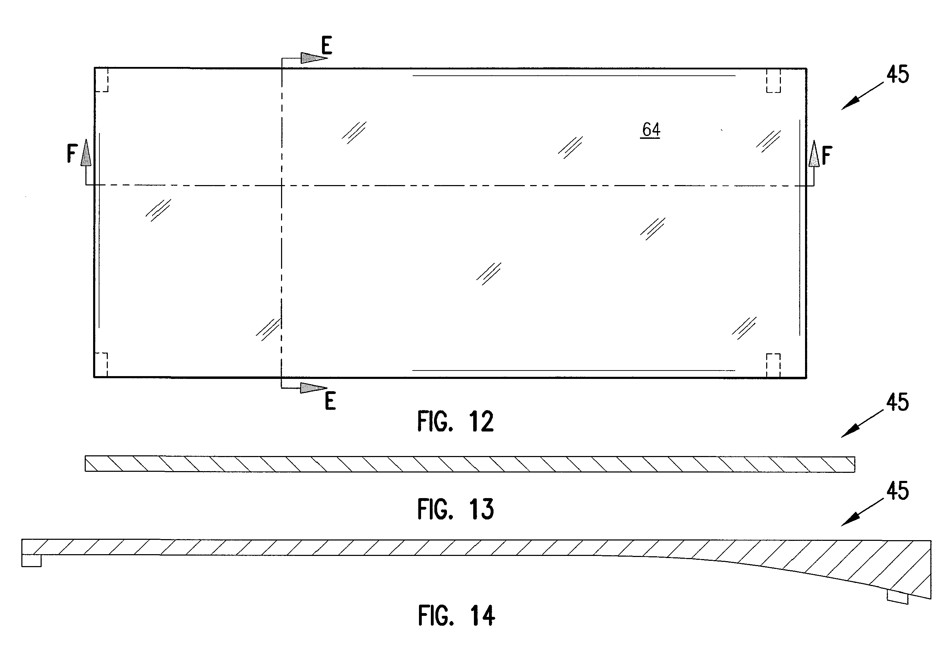

Boards 15, 24 and 31 are formed in a series of steps. As shown in Figs. 9-14, a metal mold is created to conform to the desired profile of the finished foam sports board. Mold 43 has a top portion 44 and a bottom portion 45. As shown, top portion 44 has an inner surface 63 with a contour that includes a number of ridges or raised areas 59, 60 and valleys or indentations 61, 62. The contours run not only transversely 60, 62 but also longitudinally 59, 61 across the surface 63 of portion 44. In the preferred embodiment, bottom portion 45 has an inner surface 64 that is generally planar and does not contain such contours. The molds also provide the desired curvature to the board from tip to tail. During the molding process, longitudinal valleys 61 and transverse valleys 62 will form longitudinal ridges 55 and transverse ridges 56, respectively, and longitudinal ridges 59 and transverse ridges 60 will form longitudinal valleys 57 and transverse valleys 58, respectively.

Once mold 43 is created, the board is formed in a series of steps, some of which may vary somewhat depending on the embodiment. For each embodiment however, a top and bottom sheet are first formed.

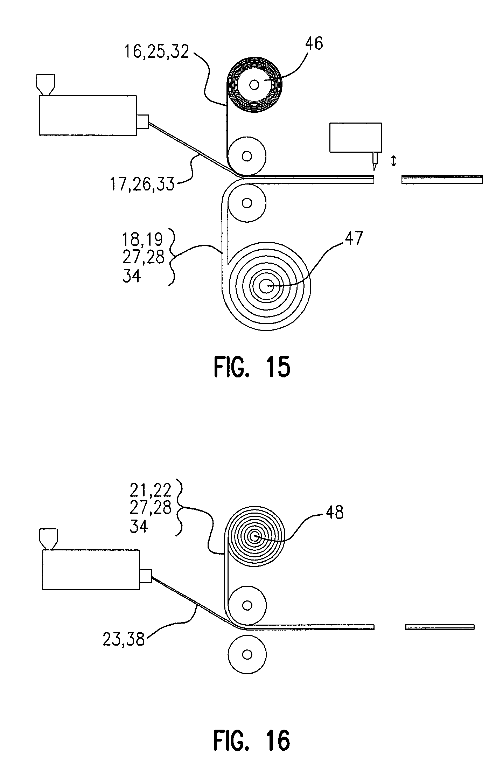

For board 15, layer 16 is imprinted with the desired graphics using a conventional imprinting procedure. Foam layers 18 and 19 are then heat laminated to each other using a conventional heat lamination method to form a foam laminate 18/19. As shown in Fig. 15, film layer 16 is then thread from a top roll 46 and foam laminate 18/19 is fed from bottom roll 47. As layer 16 and foam laminate 18/19 are fed from rolls 46 and 47, respectively, resin 17 is extruded, using a conventional extrusion process, between the inner surface of layer 16 and the outer surface of layer 18 of foam laminate 18/19 to form a laminated sheet of layers 16, 17, 18 and 19. With respect to board 15, this is the top sheet 16/17/18/19 referred to below. Next, layer 21 is laminated to layer 22 using a conventional heat lamination method to form a foam laminate 21/22. As shown in Fig. 16, foam laminate 21/22 is then fed from a top roller 48, while film layer 23 is extruded, using a conventional extrusion process, onto the outer surface of layer 22 of laminate 21/22 to form a laminated sheet of layers 21, 22 and 23. With respect to board 15, this is the bottom sheet 21/22/23 referred to below.

For board 24, a laminated top sheet of layers 25, 26, 27 and 28 is formed using the same general procedure for forming the top sheet 16/17/18/19 with board 15. The bottom sheet for board 24 is a single layer 30, and is not necessarily a laminated sheet.

For board 31, the laminated top sheet of layers 32, 33 and 34 is formed using the same general procedure for forming the top sheet 16/17/18/19 with board 15. However, for this embodiment, a single foam layer 34 is fed from roller 47, rather than a two layered foam laminate 18/19 or 27/28 as with board 15 and 24, respectively. The laminated bottom sheet of layers 36, 37 and 38 is formed using the same general procedure for forming the bottom sheet 21/22/23 with board 15.

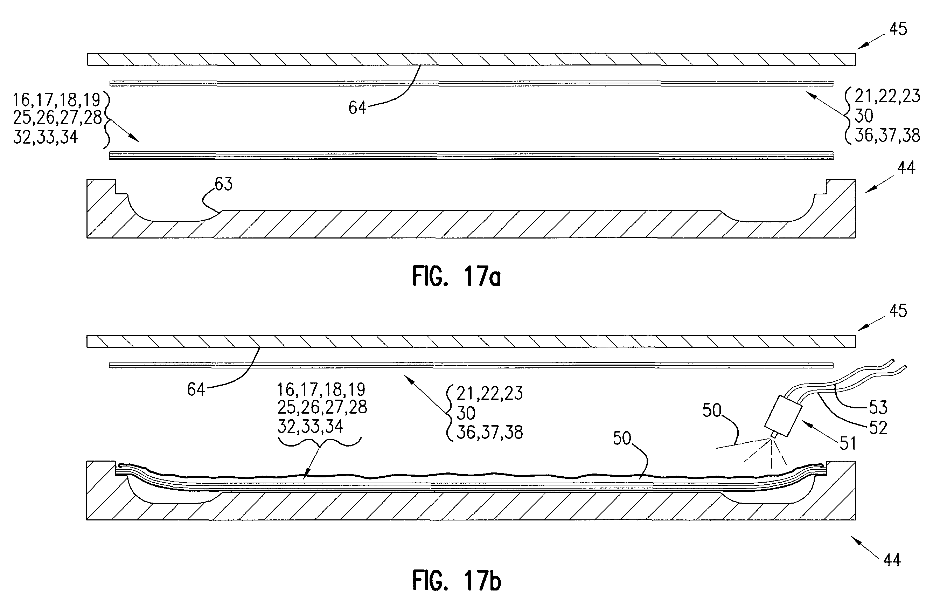

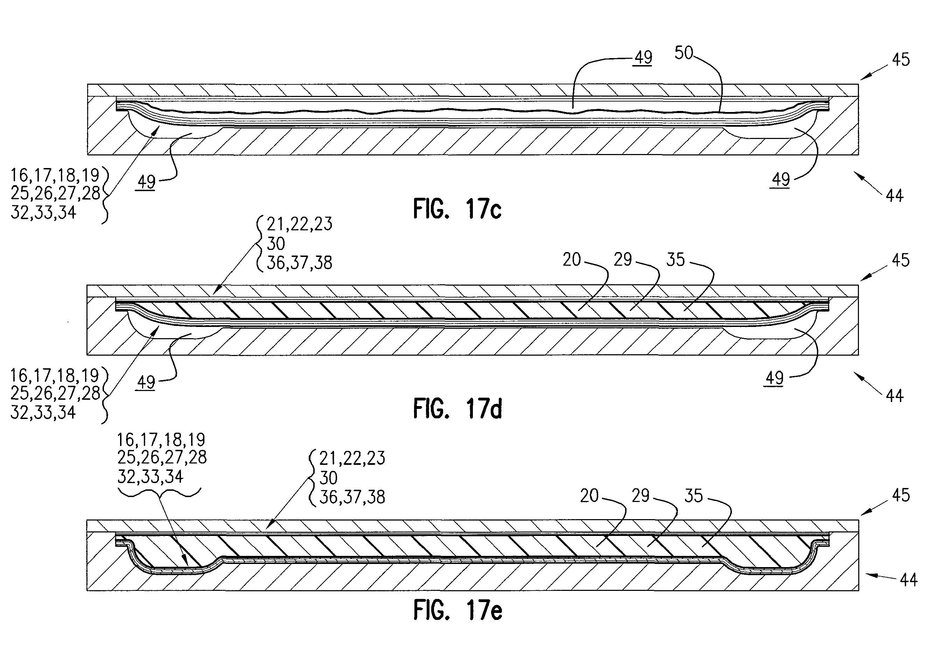

Once these top and bottom sheets are formed, the top portion 44 and bottom portion 45 of mold 43 are separated and rotated such that portion 44 is at the lowest level and inner surface 63 faces upward to act as a tray upon which the other elements will be stacked, as shown in Fig 17a. As shown in Fig. 17b. the respective top sheet is placed upside down on portion 44 of the mold 43 such that film layer 16, 25, 32 is against the inner surface 63 of the bottom portion 44 of mold 43. A polyurethane forming mixture 50 is then applied to the foam layer 19, 28, 34 of the top sheet. In the preferred embodiment, this mixture 50 is applied using a conventional spray gun 51 and is formed from an isocyanate component and a polyol component, which are introduced through hoses 52 and 53 to spray gun 51 to form mixture 50. The spraying is accomplished with this two component mechanical mixing spray gun. The isocyante and polyol components are mixed in a ratio of 1:1 by volume using a conventional proportioning equipment and then sprayed onto the inner surface of layers 19, 28 and 34 of the top sheets, respectively. In the preferred embodiment, this step is carried out with a tank temperature set at about 75° F, hose temperatures at 80° F, and a spraying pressure of approximately 1,500 pounds per square inch. An example of a typical formulation of the polyurethane mixture 50 employed to produce the urethane foam core is shown in the table below.

| | By Weight |
|---|---|
| **ISOCYANATE COMPONENT** | |
| Polymeric MDI (Diphenymethane Diisocyanate) (31.5% NCO) | 100 parts |

| **POLYOL COMPONENT** | |
|---|---|
| Polyether Triol (370 OH#) | 93% |
| Glycol Crosslinker | 2% |
| Alkylamines Catalyst | 1% |
| Polyether-modified Polysiloxane | 3% |
| Water | 1% |
| | 100 parts |

The proportioning FPL mixer produced by Canon, of Via C, Colombo, 49 20090 Trezzano S/N, Milan, Italy, may be used in the preferred embodiment.

Immediately after mixture 50 has been sprayed onto the inner surface of the top sheet, the bottom sheet is placed over the top sheet such that the mixture is between the inner surfaces of the top and bottom sheet, as shown in Fig. 17c. Bottom portion 45 of mold 43 is in turn placed over the bottom sheet. The top 44 and bottom 45 portions of mold 43 are then closed, forming a cavity 49 therebetween. Pressure is then applied to the mold by ramps to mate the two opposed mold portions 44 and 45.

As shown in Figs 17d and 17e, when the activated polyurethane mixture 50 between the top and bottom sheets expands to form a polyurethane foam core, it fills cavity 49 and forces the top and bottom sheets to conform to the contours of the inner surfaces 63 and 64 of top and bottom portions 44 and 45 of mold 43, respectively. The molds are then allowed a short period of time to cool, after which the ramp pressure is released and the cured foam board is removed and the flash from the seam edge is trimmed.

The sports board may further include one or more handles attached to the top surface of the board. The handles are generally attached to the board by snap-rivets and snap-posts passing through apertures in the board and coupled with the board through a flexible strap member.

The method employed provides a fast curing process, which enables finished boards to be pulled from the mold after cooling for about 2 to 15 minutes. This is substantially shorter than the curing time required on conventional fiberglass reinforced polyester molding.

The properties of the finished sports board may be varied from a more flexible board to a stiffer board by adjusting the density of the urethane foam. This production process results in greater efficiencies, with 20 or 30 foam boards being able to be produced per hour. Because chemical mixture 50 is completely encapsulated by the top and bottom sheets, the process does not require a mold releasing agent. The urethane mixture 50 inside the mold expands and fills up the mold cavity 49 very quickly, providing excellent wet-out to the mold surfaces and reproducing the detailed contours of the mold profile without substantial voids, pinholes or other surface defects that occur with conventional fiberglass reinforced products.

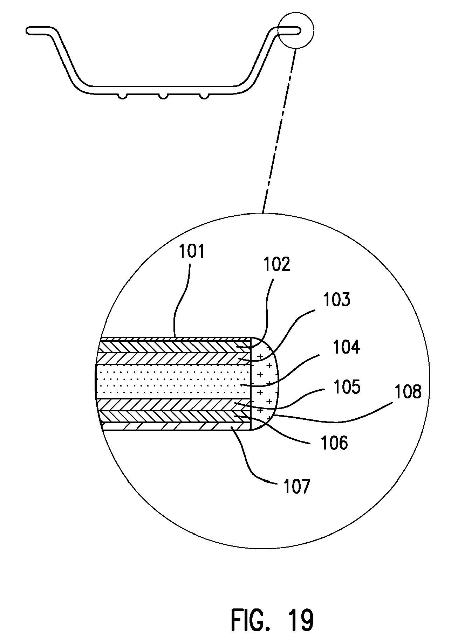

A fourth embodiment of the molded sports board is shown in Fig. 19. Fig. 19 is a cross section view of an embodiment of the sports board. Figure 19 shows the molded board having a top graphic film layer 101, over a high-density polyethylene foam layer 102, over a low density polyethylene foam layer 103, over a polyurethane core 104, over a low density polyethylene foam layer 105, over a high-density polyethylene foam layer 106, over a polyethylene slick bottom film layer at the very bottom 107. A polyethylene foam sheet contoured to the edge is bonded or adhered to the edge 108.

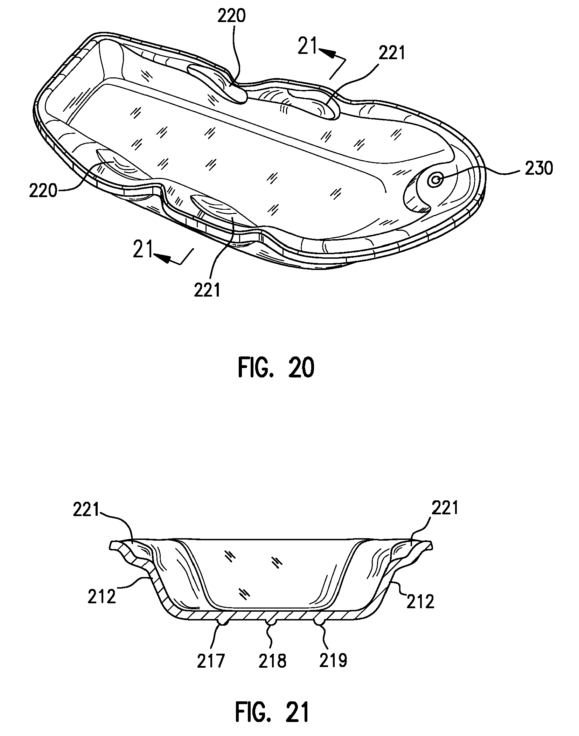

The sports board is a basin-shaped structure designed for sliding down a snow covered slope or the like. The sports board includes an elongated flat bottom running surface with a pair of opposite upward extending sidewalls, a forward sloped front wall and a rounded rear wall. As shown in Fig. 19, the bottom surface is substantially flat when viewed from a front elevational view. When viewed from a cross section view as shown in Fig. 21, the bottom surface preferably has longitudinally aligned ridges allowing directional tracking of the sports board to track in a substantially straight line. Alternatively the bottom surface may contain longitudinally extending alternating grooves and ridges for directional tracking. Fig. 20 shows a cross-sectional view generally taken from a perspective angle. The sidewalls extend upward to the top of the board and curve laterally to a trim edge that acts as a continuous handrail formed on the perimeter edge of the sports board. The handrail may further include a molded recess on the top or bottom surface for selected purchase of the rider's hand. Alternatively the handrail may include a downward extending edge to form a finger cavity in which the rider's fingers extend when gripping the handrail for enhanced purchase of the rider's hand.

The bowl shaped sports board retains a person or two persons inside. Handgrips are integrally formed with the board on the left and right sides of the sports board. A pair of front grips 221 is molded into the board for the front rider and a pair of rear grips 220 provides gripping for the rear rider. The grips allow toboggan style riding on snow or any other suitable surface. A front tow ring 230 allows users to tow the craft by a rope. Users may lean or pull on the grips exposing different bottom ridges to the snow. As seen in Fig. 21 the middle ridge 218 has parallel ridges 219 and 217 extending across the bottom of the board. A user may shift weight against the sidewalls 212 to use the ridges 217, or 219 for steering.

In the preferred embodiment, the sports board has dimensions approximately 54" in length, 21 " in width, and 6" in height.

Fig. 19 shows a cross section view of the fourth embodiment. The layered structure of the fourth embodiment is the same as the first embodiment. Layers 100-107 are generally of the same structure and composition as layers 16-23. Layer 16 is a graphically imprinted film layer. Layer 18 and 19 between the film layer and the core provide a soft foam support surface for seating that absorbs impacts during use. In another embodiment, layer 16 and 17 may be eliminated from the construction and layer 18 becomes the outer top layer of the sports board. The bottom sheet 23 is a polymer film sheet that forms a slick running surface suitable for gliding over water or snow.

As shown in Fig. 19, the hand rail further preferably includes a resilient traction material 108 applied to the seam formed by the top layer, foam core and bottom sheet, thereby creating an aesthetic finish, protecting the seam from delamination and enhancing purchase of the rider's hand. The traction material should be selected from a group consisting of polyethylene foam, polypropylene foam, a copolymer foam of polyethylene and ethylene vinyl acetate, a copolymer foam of polyethylene and polypropylene, and a copolymer foam of polystyrene and polyethylene.

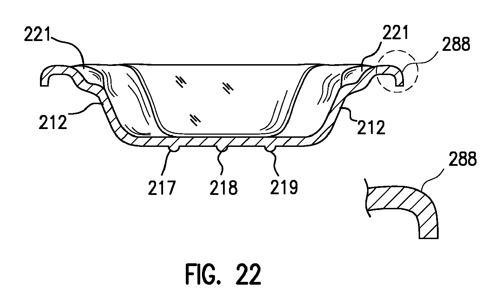

The edge of the sportsboard may have a rim extending downward forming a lip. As seen in Fig. 22, the lip 288 provides a grip. The lip may be formed around the outer edge of the board allowing user grip at various angles. Graphic film can be applied to the top, bottom or edges of the sport board, or if the graphic film is omitted the polyethylene foam sheet on the top deck can be colored foam or otherwise printed by silk screen methods.

## Claims

1. A method of manufacturing a contoured sports board comprising the steps of:
providing a non-expanded film layer;
providing a polymer foam layer;
bonding said film layer to said foam layer to form a top laminated sheet;
providing a bottom sheet;
providing a mold having a top portion and a bottom portion, said top and bottom portions having inner surfaces and configured to be placed in opposition to each other with said inner surfaces defining a cavity therebetween;
said inner surface of said top portion of said mold having contouring defining at least one valley;
placing said film layer of said top sheet against said inner surface of said top mold portion;
providing a urethane foam forming mixture;
spraying said mixture on said foam layer of said top sheet;
placing said bottom sheet on said top sheet with said mixture between said top sheet and said bottom sheet;
placing said inner surface of said bottom portion of said mold on said bottom sheet
mating said bottom portion of said mold with said top portion of said mold;
applying pressure to said mold;
allowing said mixture time to expand between said top sheet and said bottom sheet;
unmating said top and bottom portions of said mold;
whereby heat from the expansion of said mixture to form a polyurethane foam core heat laminates said top sheet and said bottom sheet to said polyurethane core to form a board having an outer surface contour generally conforming to said contour of said inner surfaces of said mold.

2. The method set forth in claim 1, wherein said bottom sheet is formed by extruding a polymer film layer and heat laminating said polymer film to a polymer foam layer to form a film/foam laminated sheet, wherein said polymer film layer may have a thickness in the range of about 0.3 to about 1.5 mm.

3. The method set forth in claim 1 or 2, wherein said bottom sheet comprises a non-expanded thermoplastic polyurethane film, wherein said thermoplastic polyurethane film may have a thickness in the range of about 0.3 to about 1.5 mm.

4. The method set forth in one of claims 1 to 3, and further comprising the steps of:
providing a second non-opaque polymer film layer having an outer surface and an inner surface;
applying a graphic image to said inner surface of said second film layer;
laminating said inner surface of said second film layer to said film layer.

5. The method set forth in one of claims 1 to 4, wherein said film layer is selected from a group consisting of polyethylene, polypropylene, and a copolymer of ethylene vinyl acetate and polyethylene.

6. The method set forth in one of claims 1 to 5, wherein said polymer foam layer is selected from a group consisting of polyethylene foam, polypropylene foam, a copolymer foam of polyethylene and ethylene vinyl acetate, a copolymer foam of polyethylene and polypropylene, and a copolymer foam of polystyrene and polyethylene.

7. The method set forth in one of claims 1 to 5, wherein said polymer foam layer is thermoplastic polymer foam.

8. The method set forth in one of claims 1 to 7, wherein said providing a urethane foam forming mixture comprises mixing an isocyanate and polyol component.

9. A molded sports board, comprising:
a polyurethane foam core;
a graphically imprinted film layer having an outer surface;
an intermediate polymer foam layer between said film layer and said core;
said film and intermediate layers having a molded profile such that said outer surface of said film layer has a contoured cross-section having multiple ridges and valleys.

10. The molded sports board of claim 9, wherein at least one of said valleys has a depth relative to an adjacent ridge of at least 2 mm.

11. A molded sports board, comprising:
a polyurethane foam core;
a graphically imprinted film top layer having an outer surface;
an intermediate polymer foam layer between said film layer and said core;
a bottom sheet with an elongated flat running surface and two, opposite upward extending, longitudinally aligned sidewalls; each sidewall including a continuous hand rail formed on its perimeter edge.

12. The molded sports board of claim11, wherein said bottom sheet further comprises a thermoplastic foam sheet laminated to a polymer film sheet, said laminate forming a slick running skin suitable for gliding over water or snow, wherein said bottom sheet may include a plurality of longitudinally aligned ridges for directional tracking of the sports board, and wherein said bottom sheet may include longitudinally-extending alternating grooves and ridges.

13. The molded sports board of claim 11 or 12, wherein said hand rail further includes
a molded recess on the top or bottom surface of hand rail for selected purchase of the rider's hand and / or
a downward extending edge for enhanced purchase of the rider's hand and / or
a resilient traction material applied to the seam formed by the top layer, foam core and bottom sheet, thereby creating an aesthetic finish, protecting the seam from delamination and enhancing purchase of the rider's hand, wherein said traction material is selected from a group consisting of polyethylene foam, polypropylene foam, a copolymer foam of polyethylene and ethylene vinyl acetate, a copolymer foam of polyethylene and polypropylene, and a copolymer foam of polystyrene and polyethylene.
